# EUROPEAN PATENT APPLICATION

(11) **EP 2 615 315 A1**
(43) Date of publication of application: **17.07.2013**
(21) Application number: 12194750.1
(22) Date of filing: 29.11.2012
(51) Int. Cl.: F16B 39/10

(54) **Retaining bracket for threaded fasteners and a retaining assembly**

(30) Priority: 12.01.2012 GB 201200444
(71) Applicant: Rolls-Royce plc, London SW1E 6AT (GB)
(72) Inventor: Cooper, Joseph, Bristol, South Gloucestershire BS32 8DS (GB)
(74) Representative: Roberts, Nicholas John

(57) **Abstract**

A retaining bracket (42) for retaining a plurality of threaded fasteners (44) in position on a component (40), and a retaining assembly including the retaining bracket (42) and at least one fastener (44). Each fastener (44) comprises a head (48) having a first face (50) which, in use, lies adjacent a surface (52) of the component (40) against which the fastener (44) is installed, a second face (56) distal from the first face (50), and a side face (54) extending between the first (50) and second faces (56). The bracket (42) comprises a substantially rigid base member (64), and a plurality of engagement members (62) extending from the base member (64) at spaced locations therealong. Each engagement member (62) is configured to engage with only the side face (54) of each respective fastener head (48) such that, in an installed condition, the base member (64) extends only along the side faces (54) of the fasteners (44) between the respective first face (50) and second face (56).

## Description

### Background to the Invention

This invention relates to retaining devices for retaining threaded fasteners in position on a component, and in particular concerns a retaining bracket suitable for aerospace applications, such as aircraft gas turbine engine thrust vectoring nozzles.

In the field of aerospace engineering it is necessary to guard against the complete separation of threaded fasteners such as bolts and the like from the components to which they are attached due to vibration for example. It is also preferable to prevent threaded bolts from becoming inadvertently loose. If the threaded fasteners were to completely separate, they may cause damage. Traditionally bolt heads have been cross-drilled and locking wire installed to ensure that the bolts do not loosen or become separated from the component to which they are attached during operation. Conventional wire locking techniques have proved to be very effective and have been widely adopted across industry. Wire locking is now no longer permitted however because of the high risk of injury to maintenance staff. There is a requirement therefore for a simple, cost effective and easy to use alternative that can provide the same high levels of reliability as conventional wire locking techniques.

One area in particular where there is a requirement for an alternative to wire locking is in situations where the protrusion of a loosened bolt could cause the failure of a safety critical system due to conflict of the bolt head with a moving part. For example, it is necessary to guard against inadvertent loosening of bolts in thrust vectoring nozzles such as three bearing swivel duct nozzles of the type described in GB-A-2,163,105 and shown in Figure 9. Here a loosened bolt protruding from a flange could cause failure of the vectoring system due to conflict of the bolt head with a moving part such as an actuator mounting bracket.

One proposed solution is described in GB2419169. This document describes a retaining washer which fits between the head of the threaded fastener and the surface on which the fastener is installed. The retaining washer extends underneath a plurality of fasteners, and includes engagement means which engage against a head of the fastener to retain it in position.

However, the washer described in GB2419169 must be installed underneath the respective fasteners, and so raises the height of the head of the fastener. This is not acceptable where for instance there is insufficient clearance above the fasteners. The washers also increase the "clamp length", i.e. the distance between the bolt and the nut, which increases the effects of thermal cycling where the fasteners are used in a gas turbine engine for example. This is because where the materials for the threaded fasteners and clamped components are different they will expand at different rates and by different amounts. This causes the load in the bolt to be increased and decreased, cycling the bolt and fatiguing it. This cycling will reduce the effective life of the bolt. The larger the clamp length, the larger the cycle will be which in turn will reduce the life more quickly.

The present invention provides a retaining bracket for retaining a plurality of threaded fasteners which seeks to solve some or all of the above problems.

### Summary of the Invention

According to a first aspect of the invention there is provided a retaining bracket for retaining a plurality of threaded fasteners in position on a component, each fastener comprising a head having a first face which, in use, lies adjacent a surface of the component against which the fastener is installed, a second face distal from the first face, and a side face extending between the first and second faces, the bracket comprising:
a substantially rigid base member; and
a plurality of engagement members extending from the base member at spaced locations therealong, each engagement member being configured to engage with only the side face of each respective fastener head such that, in an installed condition, the base member extends only along the side faces of the fasteners between the respective first face and second face.

The retaining bracket of the present invention readily enables threaded fasteners to be retained if inadvertently loosened or broken, for example due to vibration. The retaining bracket is arranged such that neither the base member nor the engagement members extend above the second face, or below the first face of the head of the or each fastener, such that the overall height of the bracket is not increased when the bracket is installed, but rather extends only along the side faces. Such an arrangement can therefore be used in smaller spaces than previous retaining arrangements.

The bracket may comprise at least three engagement members. By providing three engagement members which each engage with a respective threaded fastener, the fasteners are retained more securely. This is because the provision of three engagement members provides three attachment points, and thereby prevents rotation of the retaining bracket if one of the threaded fasteners becomes loose.

Each engagement member may comprise a pair of elastically deformable arms which may be configured to receive the side face of a respective head. Each arm of each pair r of arms may define an end part, and each pair of arms may be elastically deformable between a closed position in which the respective end parts are spaced apart to a first extent, and an open position in which the respective end parts are spaced apart to a second, greater extent. In the closed position, the end parts may be spaced apart less than the width of the respective head or of a groove in the respective head, and in the open position, the end parts may be spaced apart by at least the diameter of the respective head or of the groove in the respective head.

An internal surface of each of the arms of one or more of the engagement members may be serrated. The serrations may permit the internal surface of each of the arms to engage a location formation provided on the threaded fastener. Such an arrangement provides a retaining bracket that is able to prevent inadvertent rotation, and therefore loosening of the respective threaded fastener engaged by the respective engagement member.

The base member may comprise an L-shaped cross-sectional profile. The base member may be provided as, at least in part, an elongate web. Alternatively the base member may be provided as of a ring or a series of arcuate webs that may be joined together to form a ring.

The retaining bracket may comprise an elastic material, i.e. a material which can be elastically deformed and may comprise a metallic material. Preferably the retaining bracket comprises one of titanium and stainless steel.

According to a second aspect of the invention there is provided an assembly comprising a plurality of fasteners and a retaining bracket according to the first aspect of the invention, each fastener comprising a head having a first face which, in use, lies adjacent a surface of the component against which the fastener is installed, a second face distal from the first face, and a side face extending between the first and second faces.

Each fastener may comprise a location formation, the engagement members being configured to engage with the location formation of a respective fastener. The location formation may comprise a recess provided in the side face of the respective fastener. The location formation may comprise a non-circular profile when viewed from the second face and may comprise a splined profile when viewed from the second face.

According to a third aspect of the invention there is provided a three bearing swivel nozzle comprising an assembly according to the second aspect of the invention.

According to a fourth aspect of the invention there is provided a gas turbine engine comprising an assembly according to the second aspect of the invention.

### Detailed Description of the Invention

Various embodiments of the invention will now be more particularly described, by way of example only, with reference to the accompanying drawings, in which:
Figure 1 is a cross sectional view of a gas turbine engine;
Figure 2 is a perspective view of a component of a gas turbine engine comprising a plurality of installed fasteners and an installed retaining bracket;
Figure 3 is a perspective view of the part of the gas turbine engine shown in Figure 2 without a retaining bracket installed;
Figure 4 is perspective view of the retaining bracket of Figure 2;
Figure 5 is a cross sectional view through the component shown in Figure 2 with the retaining bracket installed.
Figures 6a and 6b are a section view and a perspective view respectively of the fastener of Figure 2;
Figure 7 is a perspective view of the component and the retaining bracket of Figure 2 during installation;
Figure 8 is a plan view of part of an alternative retaining bracket; and
Figure 9 is a diagrammatic side view of a three bearing swivel nozzle.

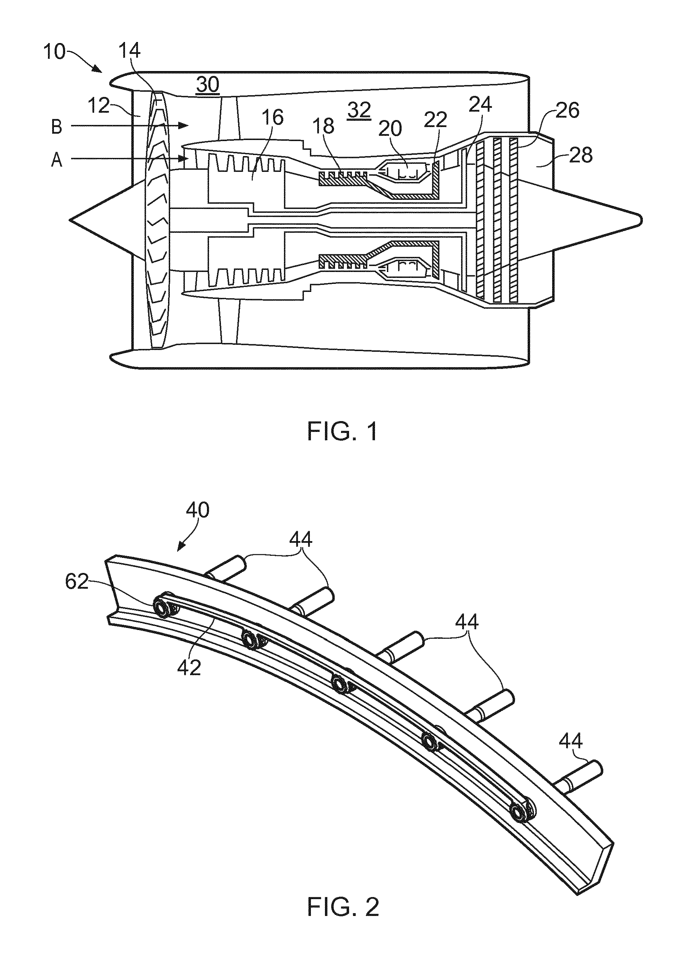

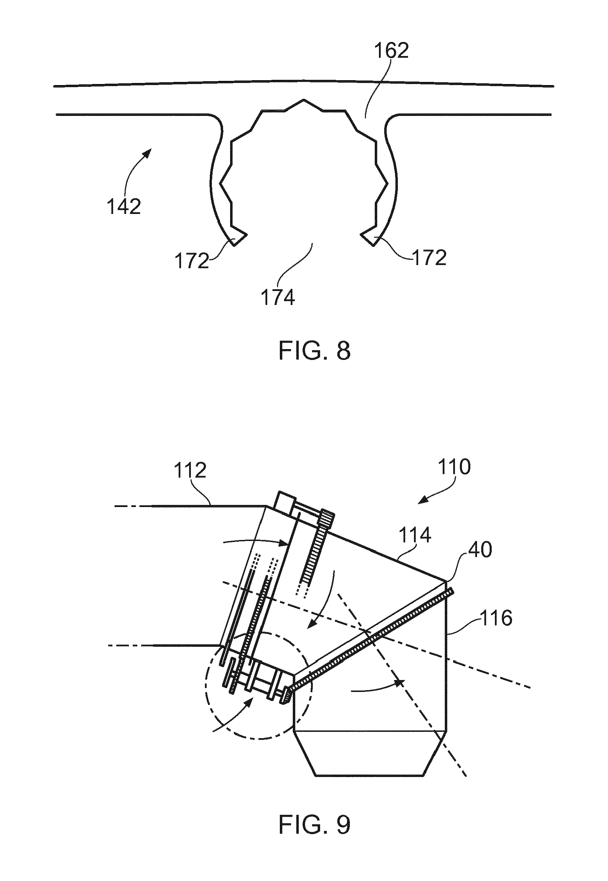

A gas turbine engine 10 is shown in Figure 1 and comprises an air intake 12 and a propulsive fan 14 that generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. A nacelle 30 surrounds the gas turbine engine 10 and defines, in axial flow B, a bypass duct 32. The gas turbine engine 10 may include a three bearing swivel nozzle 110, as shown in Figure 9. The three bearing swivel nozzle includes a fixed first duct 112, and rotatable second and third ducts 114, 116. A component 40 in the form of a flange is provided on each of the second and third ducts 114, 116, into which threaded fasteners in the form of bolts 44 are installed. The flange 40 is in close proximity with the remainder of the other of the ducts 116, 114, particularly when the swivel nozzle is in the position shown in Figure 9. As such, there is limited clearance around, and in particular above, the heads of the bolts 44.

Figures 2 to 7 show a component 40 having a plurality of apertures 41 extending therethrough, through which bolts 44 are inserted. Although in the present invention the component 40 is in the form of a flange of one of the ducts 114, 116, the component could be, for example, any flanged joint between adjacent casing or section parts in a gas turbine engine casing or nozzle duct. The component 40 is part annular, and the bolts 44 are therefore arranged spaced from one another along a part circular path. An assembly comprising the component 40, a retaining bracket 42 and a plurality of fasteners in the form of bolts 44 is provided to retain the bolts 44 (i.e. prevent the bolts 44 from completely separating from the component 40) when one of the bolts 44 fails or becomes inadvertently loosened.

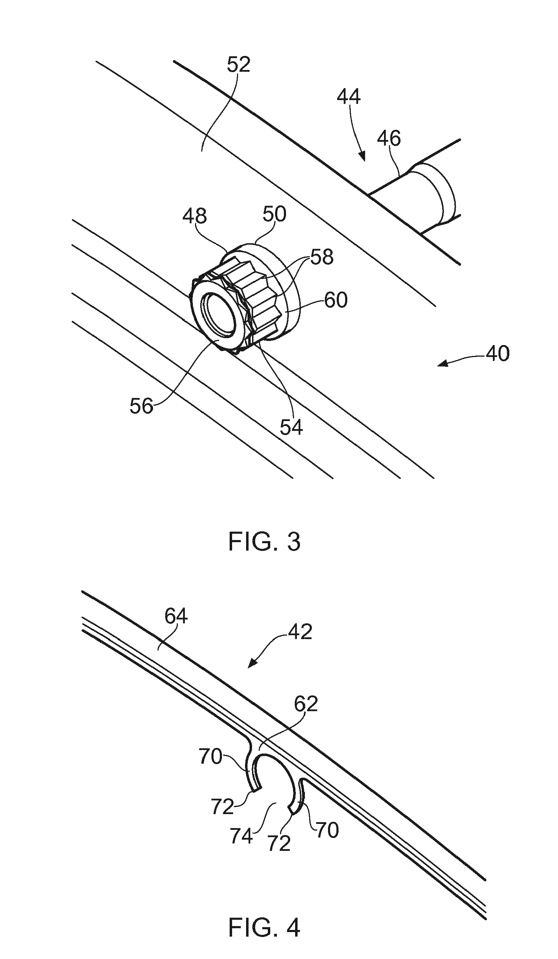

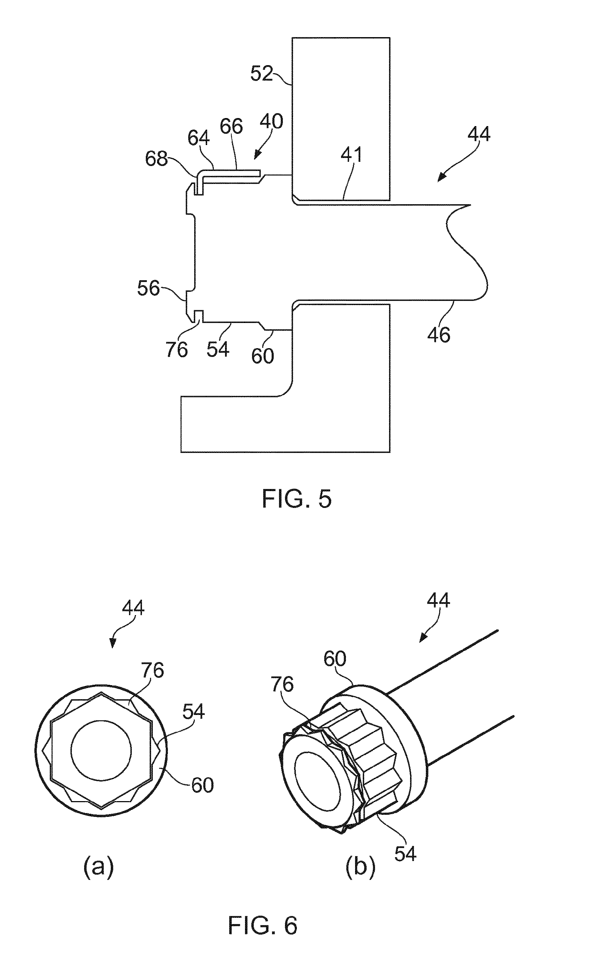

One of the bolts 44 is shown in more detail in Figure 3, (installed in the component 40 but without the retaining bracket 42) and in Figures 6a and 6b (before installation). Each bolt 44 comprises an elongate shank portion 46 and a head 48. The head 48 has a first face 50 which lies adjacent with and engages a surface 52 of the component 40 when installed. The head further comprises a profiled side face 54, which extends from the first face 50 to a second face 56. The second face 56 is located distally from the first face 50.

The illustrated bolt heads 48 are of the type commonly used in aerospace applications comprising an upper portion defining bi-hex type splines 58 defined by the side face 54 for receiving a torque transmission tool such as a spanner or socket (not shown), and a flanged portion 60 which contacts the surface 52 of the component 40 and distributes the tensile load of the bolt 44 to the component 40 to join the component 40 to another (not shown). The bolt heads 48 also comprise a location formation in the form of a groove 76 (shown in Figures 6a and 6b) formed in the side face 54, near to the second face 56 of the head 48. As shown in Figure 6a, the groove 76 has a hexagonal profile when viewed from the second face 56 of the head 48. The hexagonal profile of the groove 76 is arranged such that the projections defined by the splined profile of the groove 76 match with alternate projections defined by the splined profile of the remainder of the head 48.

Figure 4 shows the retaining bracket 42 before assembly. The bracket 42 comprises a base member which is provided as an at least partly elongate web 64. The web 64 is arcuate to match the annular profile of the component 40. The web 64 is of a length sufficient to extend between the bolts 44 that are to be retained on the component 40 (in this case five bolts 44). As shown in Figure 5, the web 64 comprises an L-shape profile when viewed from one end. The profile of the web 64 comprises a first portion 66, and a second portion 68. The second portion 68 is shorter than the first portion 66, and extends at a right angle to the first portion 66 when viewed from one end. The L-shaped profile increases the strength of the web, and therefore prevents bending of the web 64 under load, particularly where for example one of the bolts 44 is loosened such that it extends further outwardly than the remainder of the bolts 44.

The bracket 42 further comprises a plurality of engagement members in the form of clips 62. As can be seen in Figure 2, one clip 62 is provided for each of the five bolts 44. Each clip 62 comprises a pair of arms 70, which extend outwardly from the second portion 68 of the web 64, and extend in the same direction as the second portion 68 when viewed from one end. Each arm 70 is part circular, and curves inwardly such that each of the arms 70 curves towards the other. In this embodiment, both inner and outer surfaces of the arms 70 are curved. Each of the arms 72 has an end, such that a gap 74 is defined between the arms 70.

The retaining bracket 42 is formed of an elastically deformable material, such as a plastics material or sheet metal. Preferably, the retaining bracket comprises stainless steel or titanium.

The fastener assembly is installed on the component 40 as follows.

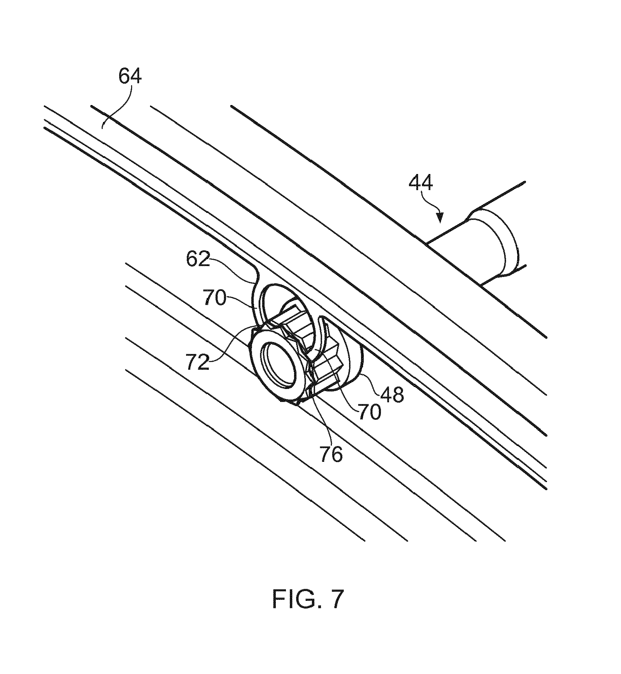

Each bolt 44 is inserted in a respective aperture 41 and rotated until the first face 50 engages with the surface 52. The bolt 44 is then tightened to a required torque by a suitable tool (not shown). The bracket 42 is then placed above the bolts 44 as shown in Figure 7, with each of the clips 62 facing downwards with their ends 72 engaging against an edge of a respective groove 76.

As can be seen in Figure 7, the clips 62 are biased toward a closed position, in which the space 74 between the ends 72 is less than the diameter of the groove 76 of the respective bolt. The bracket 42 is then pushed downwardly such that the ends 72 of each of the clips 62 are forced outwardly by the groove 76, and are elastically deformed from the closed position, as shown in the drawings, to an open position, in which the ends 72 of the respective arms 76 are spaced further apart than in the first position such that the end parts are spaced apart by at least the diameter of the groove 76. The bracket 42 is then pushed further downwardly until the groove 76 of each bolt 44 is fully received within the respective clip 62. Once the groove 76 is fully received within the respective clip 62, the ends 72 of the respective arms 70 return to the first, closed position, and the respective bolts 44 are thereby clamped in place.

Once the bracket 42 is installed, any bolts 44 which become loose or break are prevented from completely separating from the component 40 by the bracket 42. This is because the bracket 42 remains clamped to both the broken / loose bolt 44, and the remainder of the bolts 44. The web 64 connects the clips 62 together, such that the broken / loose bolts 44 are held by the remaining, tight bolts 44.

The bracket 42 can be subsequently removed for tightening / removal of one or more of the bolts 44 by reversal of the above installation process.

An alternative bracket 142 is shown in Figure 8. The bracket 142 comprises a web 164, which is similar to the web 64. The bracket 142 further comprises a plurality of clips 162, one of which is shown in detail in Figure 8. Each clip 162 comprises a pair of arms 170. The exterior facing side of each arm 170 curves toward the other arm 170, and includes ends 172 which define a gap 174 therebetween, as in the first embodiment shown in Figures 1 to 7. However, the interior facing side of each arm is shaped to match the shape of the bolt heads 48 they are to engage. To engage the bolts 44 shown in the drawings, the interior facing side of each arm 170 is serrated for engagement with the splines on the head 48.

As well as preventing separation of the bolts 44 from the component 40, the bracket 142 can therefore prevent rotation of the bolts 44. The bracket 142 therefore provides additional security in comparison to the bracket 42.

The described retaining brackets therefore provide means for retaining bolts on a component following loosening or failure of the bolts. The retaining brackets of the present invention have a low profile and extend only to the side of the bolts when installed. As a result, the retaining brackets are suitable for use in limited height spaces such as flanges on three bearing swivel nozzles. In some embodiments, the retaining bracket can also prevent accidental loosening of the bolts.

Although aspects of the invention have been described with reference to the embodiments shown in the accompanying drawings, it is to be understood that the invention is not limited to those precise embodiments and that various changes and modifications may be effected without further inventive skill and effort. For example, although the illustrated embodiment is capable of retaining five threaded fasteners, the retaining bracket could be adapted to retain substantially any number of bolts from a minimum of two bolts. Although each retaining bracket is described as comprising a base member comprising an elongate web, the base member could be provided in the form of a ring, such that the base member can extend around part or the whole of an annulus. Alternatively, the base member could be part annular, such that a plurality of base members form a ring when joined end to end.

Although the invention has been described in reference to a gas turbine engine, the arrangement could be used to retain fasteners on other locations. The bracket could also be configured such that the clips extend from above the web when installed, rather than from below as shown in the drawings.

## Claims

1. A retaining bracket (42) for retaining a plurality of threaded fasteners (44) in position on a component (40), each fastener (44) comprising a head (48) having a first face (50) which, in use, lies adjacent a surface (52) of the component (40) against which the fastener (44) is installed, a second face (56) distal from the first face (50), and a side face (54) extending between the first (50) and second (56) faces, the bracket (42) comprising:
a substantially rigid base member (64); and
a plurality of engagement members (62) extending from the base member (64) at spaced locations therealong, each engagement member (62) being configured to engage with only the side face (54) of each respective fastener head (48) such that, in an installed condition, the base member (64) extends only along the side faces (54) of the fasteners (44) between the respective first face (50 and second face (56).

2. A retaining bracket according to claim 1 wherein the bracket (42) comprises at least three engagement members (62).

3. A retaining bracket according to claim 1 or claim 2, wherein each engagement member (42) comprises a pair of elastically deformable arms (70) which are configured to receive the side face (54) of a respective head (48).

4. A retaining bracket according to claim 3, wherein each arm of each pair of arms (70) defines an end part (72), and wherein each pair of arms (70) is elastically deformable between a closed position in which the respective end parts (72) are spaced apart to a first extent, and an open position in which the respective end parts (72) are spaced apart to a second, greater extent.

5. A retaining bracket according to claim 4, wherein in the closed position, the end parts (72) are spaced apart less than the diameter of the respective head (48), or of a groove (76) in the respective head, and in the open position, the end parts (72) are spaced apart by at least the diameter of the respective head (48) or of the groove (76) in the respective head (48).

6. A retaining bracket according to claim 5, wherein an internal surface of each of the arms (70) of one or more of the engagement members (62) is serrated.

7. A retaining bracket according to any of the preceding claims, wherein the base member (64) comprises an L-shaped cross-sectional profile.

8. A retaining bracket according to any of the preceding claims wherein the base member is provided as, at least in part, an elongate web (64).

9. A retaining bracket according to any of claims 1 to 7, wherein the base member (64) comprises a ring or a series of arcuate webs that may be joined together to form a ring.

10. A retaining bracket according to any of the preceding claims, wherein the retaining bracket (42) comprises an elastically deformable material, and may comprise one or more of a plastics material, titanium and stainless steel.

11. An assembly comprising a component (40) fastened by a plurality of fasteners (44) and a retaining bracket (42) according to any of the preceding claims, each fastener (44) comprising a head (48) having a first face (50) which lies adjacent a surface of the component (40), a second face (56) distal from the first edge, and a side face (54) extending between the first (50) and second (56) faces.

12. An assembly according to claim 11, wherein each fastener (44) comprises a location formation (76), the engagement members (62) being configured to engage with the location formation (76) of a respective fastener (44).

13. An assembly according to claim 12, wherein the location formation (76) comprises a recess (76) provided in the side face (54) of the respective fastener (44).

14. An assembly according to claim 12 or 13, wherein the location formation (76) comprises a non-circular profile when viewed from the second face (54), which non-circular profile may comprise a splined profile when viewed from the second face (56).

15. A gas turbine engine (10) comprising an assembly according to any of claims 11 to 14.
